# FASCICULE DE BREVET EUROPEEN

(11) **EP 1 330 371 B1**
(45) Date de publication et mention de la délivrance du brevet: **29.12.2004**
(21) Numéro de dépôt: 01988658.9
(22) Date de dépôt: 22.10.2001
(51) Int. Cl.: B60C 23/04

(54) **SYSTEME DE MESURE DE PRESSION ET DE COMMANDE DE GONFLAGE/DEGONFLAGE POUR PNEUMATIQUE**
SYSTEM ZUR DRUCKMESSUNG UND ZUR AUFPUMP-/ENTLEERUNGSSTEUERUNG FÜR LUFTREIFEN
SYSTEM FOR MEASURING PRESSURE AND FOR CONTROLLING INFLATION/DEFLATION FOR A TYRE

(30) Priorité: 23.10.2000 FR 0013774
(43) Date de publication de la demande: 30.07.2003
(73) Titulaire: Société de Technologie Michelin, 63000 Clermont-Ferrand (FR); Michelin Recherche et Technique S.A., 1763 Granges-Paccot (CH)
(72) Inventeur: BOULOT, Jean-Francis, F-63430 Pont du Chateau (FR)
(74) Mandataire: Dequire, Philippe
(86) Numéro de dépôt international: PCT/EP2001/012165
(87) Numéro de publication internationale: WO 2002/034552

(56) Documents cités:
- US-A- 5 119 066
- US-A- 5 231 872

## Description

La présente invention concerne un système de mesure de pression et de commande de gonflage / dégonflage de pneumatique.

De plus en plus, les constructeurs automobiles et les fabricants de pneumatiques tentent de prendre en compte les exigences de sécurité, de confort et de commodité sans cesse grandissante des usagers modernes de la route. Ce phénomène se manifeste par exemple par la banalisation de nombreux types de dispositifs pratiquement inexistants il y a à peine quelques années, comme par exemple les coussins de sécurité, les freins de type ABS, les dispositifs ESP, etc.

Plus récemment, des dispositifs de mesure et/ou de surveillance de la pression des pneumatiques sont apparus. En informant de façon simple, fiable et régulière le conducteur sur le niveau de gonflage des pneumatiques de son véhicule, on contribue à en améliorer la sécurité, la consommation, à prolonger la vie des pneumatiques, etc. De tels systèmes comportent en général au moins un capteur de pression de type connu en soi.

Ainsi, on connaît par exemple certains types de capteurs de pression (par exemple de type capacitif ou résistif), permettant de mesurer la pression d'un pneumatique à un temps donné. En général, de tels capteurs nécessitent une alimentation électrique pour effectuer les mesures et transmettre les informations recueillies. De manière connue, on équipe la roue d'une pile. Si on souhaite effectuer des mesures de pression fréquentes, voire en temps continu, ce qui est indispensable si on souhaite détecter une crevaison de pneumatique, la pile doit alors être facilement remplaçable, puisque le capteur sollicite considérablement la pile, qui se décharge rapidement. Le remplacement doit pouvoir être effectué de façon simple, rapide et peu coûteuse.

Dans un tel contexte, on rencontre régulièrement des problèmes de fiabilité dus aux contacts de la pile qui doivent supporter un environnement des plus sévères. Les contacts se dégradent et l'alimentation en énergie électrique risque de devenir aléatoire ou instable, voire complètement interrompue.

Pour pallier ce type de situation, on utilise des piles non remplaçables, qui peuvent être intégrées de façon définitives au circuit électrique, par exemple par soudage. On obtient alors une plus grande fiabilité au niveau de l'alimentation en énergie. Par contre, si on veut éviter que la durée de vie de la pile soit trop courte, on doit limiter la consommation d'énergie. Cela revient à alimenter les capteurs sur une base non permanente. On peut par exemple effectuer les mesures de pression par échantillons, à des intervalles de temps donnés. Ces intervalles sont le plus espacés possible si on souhaite que la durée de vie de la pile corresponde le plus possible à la durée de vie d'un pneumatique par exemple, voire à la durée de vie du véhicule. Un tel contexte est non convenable si on souhaite utiliser le capteur de pression pour détecter une crevaison ou tout autre type de situation similaire de perte de pression rapide et importante d'un pneumatique. Ce contexte est également non approprié si on souhaite effectuer une surveillance par exemple de seuils de gonflage ou de dégonflage. Par échantillonnage, par exemple à toutes les 30 ou 60 secondes, on détectera une éventuelle crevaison uniquement lors de la prochaine itération ou mesure, donc un certain temps après la crevaison. Or, une détection d'éclatement, pour être utile, doit être réalisée dans un très court instant, quasi-instantané. Sinon le conducteur subit les conséquences de la crevaison avant d'en être informé. Ces conséquences servent alors d'avertissement, et il est souvent trop tard pour réagir, en particulier si le véhicule circule à vitesse élevée. Lors du gonflage ou du dégonflage d'un ou plusieurs pneumatiques, il est impératif que le système de surveillance réagisse sensiblement instantanément, que ce soit pour avertir l'opérateur que le seuil requis est atteint, ou encore pour commander l'arrêt automatique du système de gonflage/dégonflage. La seule façon d'éviter qu'une surveillance précise des niveaux d'augmentation ou de diminution de pression soit indispensable, serait de prévoir des taux de variation de pression très lents ; les seuils détectés tardivement ne seraient alors pas trop dépassés. Par contre, cela rendrait les opérations très longues et fastidieuses. De plus, lors de gonflages, il y aurait risque d'entraîner une surchauffe du compresseur qui serait trop longtemps sollicité.

La présente invention vise à proposer un système de mesure de pression et de commande de gonflage / dégonflage de pneumatique permettant d'éviter ces inconvénients.

Pour ce faire, l'invention propose un système de mesure de pression et de commande de gonflage / dégonflage de pneumatique comprenant :
- un capteur de pression, en communication fluidique avec la pression ambiante du pneumatique, et susceptible de mesurer cette pression ;
- un détecteur de variation de pression susceptible de réagir à une variation de la pression à l'intérieur de la cavité du pneumatique ;
- un module de gestion, susceptible de recevoir et de traiter les informations fournies d'une part par le capteur de pression et d'autre part par le détecteur de variation de pression et susceptible, sur la base de l'information fournie par le détecteur de variation de pression, de commander soit le passage d'un mode de mesure de la pression dit « normal » vers un mode de mesure dit « accéléré », ou le passage du mode de mesure «accéléré » vers le mode de mesure « normal».

Grâce à un tel système, la surveillance de pneumatiques, lors de variation de pression tel que lors d'un gonflage ou dégonflage volontaire, peut permettre soit d'avertir un opérateur (signal pression de consigne atteinte), ou même de commander automatiquement l'arrêt du gonflage/dégonflage. Dans le premier de ces cas, le système est avantageusement utilisé avec un dispositif de gonflage et/ou dégonflage au sol (hors du véhicule), tandis que dans le second cas, le système est avantageusement utilisé avec un dispositif de gonflage et/ou dégonflage embarqué.

Le détecteur de variation de pression ou le module de gestion est avantageusement calibré pour ne pas générer de signal lors de variations minimes, ou non significatives.

De manière avantageuse, le mode « accéléré » est celui dans lequel l'intervalle de temps entre les mesures effectuées par le capteur de pression est sensiblement plus court qu'en mode « normal ».

Les itérations du mode accéléré doivent être suffisamment fréquentes et rapprochées pour permettre une détection efficace de l'atteinte de seuils ou consignes de pression, de préférence en évitant les dépassements significatifs. Les intervalles entre les mesures sont donc ajustés en fonction des exigences techniques et de sécurité.

Selon un exemple de réalisation avantageux de l'invention, le mode « accéléré » est de celui dans lequel l'intervalle de temps entre les mesures effectuées par le capteur de pression est sensiblement nul. Bien sûr, les limites technologiques font qu'il est difficile d'obtenir une mesure réellement continue, mais les itérations nombreuses et rapprochées permettent de simuler un tel type de fonctionnement. En pratique, des mesures par exemple à toutes les secondes peuvent donner des résultats satisfaisants.

En mode de mesure sensiblement continu, le système permet des rythmes de variation de pression importants, rendant les ajustements de pression rapides et efficaces, sans pour autant perdre en précision des niveaux de gonflage. Dans la mesure ou le module de gestion commande le passage au mode normal dès que cela est possible, les périodes où le capteur de pression est fortement sollicité, donc avec une consommation plus importante, demeurent sensiblement restreintes. A la fois le système de mesure et la durée de vie de la pile sont ainsi optimisés.

De manière avantageuse, lors du passage du mode « économie » vers le mode « normal », on prévoie une courte période transitoire de mode de mesure « accéléré », permettant de déceler très rapidement, voire sensiblement instantanément, toute anomalie au niveau de la pression d'un ou plusieurs pneumatiques.

Selon une variante de réalisation, le détecteur de variation de pression est susceptible de fournir un signal en relation avec le taux ζ de variation de la pression de la cavité du pneumatique.

Ce type de fonctionnement est possible avec les types de capteur de variation de pression selon l'invention.

De manière avantageuse, le détecteur de variation de pression est de type piézo-électrique. Il s'agit d'une technologie éprouvée en soit, fiable, précise, permettant des temps de réaction très courts, comme par exemple inférieur à 100 ms. Par ailleurs, une des principales caractéristiques des capteurs de type piézo-électrique consiste à pouvoir fonctionner sans alimentation. Plus particulièrement, une déformation de la membrane constituée d'un matériau de type piézo-électrique permet de générer un micro-courant. Ce courant est ensuite utilisé par un circuit de lecture et de traitement ou d'analyse du signal. Seul le module électronique nécessite une alimentation, mais de très faible puissance. Une pile longue durée peut donc être prévue.

Par exemple, le détecteur de variation de pression comprend un boîtier muni de deux chambres sensiblement isolées l'une de l'autre et séparées par une membrane de type piézo-électrique, une première chambre étant soumise à une pression de référence, la seconde étant susceptible d'être en communication fluidique avec l'ambiance du milieu dans lequel on souhaite effectuer la surveillance, ladite membrane étant déformable sous l'action d'une variation de la pression de ladite ambiance, les déformations ainsi produites permettant de générer un signal électrique dont l'intensité est en relation avec l'importance de la déformation.

La pression de référence de la chambre de référence est sensiblement constante et ne varie pas lors d'une variation de la pression de l'ambiance sous surveillance, ce qui permet au différentiel de pression entre les chambres de varier, cette dernière variation donnant lieu à génération d'un signal de type piézo-électrique.

De manière avantageuse, la membrane est adaptée pour réagir avec une amplitude et/ou une vitesse de déformation en fonction du niveau et/ou du taux de la variation de la pression.

De manière avantageuse, la pression de référence correspond au vide.

Le détecteur de variation de pression est avantageusement susceptible d'interagir sur un autre élément coopérant soit électriquement ou mécaniquement avec ledit détecteur.

Le signal transmis par le module de gestion est avantageusement de type électrique ou radio.

Le capteur est avantageusement disposé de façon à ce que l'ambiance du milieu dans lequel on effectue la surveillance corresponde à la pression à l'intérieur de la cavité d'un pneumatique. Par exemple, le capteur peut être disposé directement dans ladite cavité ; autrement, une canalisation peut permettre l'acheminement de l'ambiance jusqu'au capteur disposé par exemple dans la roue.

Selon un autre exemple de réalisation avantageux, le détecteur de variation de pression est de type anéroïde.

Il s'agit d'une technologie simple, fiable, peu coûteuse et ne nécessitant pas d'alimentation électrique importante pour fonctionner. Notamment, la capsule anéroïde ne nécessite pas d'alimentation ; seul le module électronique nécessite une telle alimentation, mais de très faible puissance. Une pile longue durée peut donc être prévue.

Ainsi, par exemple, il comporte une capsule anéroïde pourvue d'un orifice calibré en communication fluidique avec l'ambiance du milieu dans lequel on souhaite effectuer la détection, ladite capsule étant déformable sous l'action d'une variation de la pression de ladite ambiance.

De manière avantageuse, il est prévu un organe électronique de mesure ou de détection coopérant avec ladite capsule de façon à ce que les déformations ainsi produites permettent l'activation dudit organe électronique. Il peut s'agir par exemple d'un détecteur de seuil, calibré de façon à transmettre un signal électrique lorsqu'un seuil minimum pré-établi de déformation de la membrane est atteint. Selon un exemple de réalisation, ledit organe électronique est un transducteur permettant de générer un signal électrique dont l'intensité est en relation avec l'importance de la déformation.

Selon un autre exemple de réalisation avantageux, il est prévu un organe mécanique de mesure ou de détection coopérant avec ladite capsule de façon à ce que les déformations ainsi produites permettent l'activation dudit organe mécanique. Il peut s'agir par exemple d'un détecteur de seuil, calibré de façon à actionner un organe susceptible de transmettre un signal électrique lorsqu'un seuil minimum pré-établi de déformation de la membrane est atteint. Selon un exemple de réalisation, ledit organe mécanique coopère avec un rhéostat susceptible de générer un signal électrique dont l'intensité est en relation avec l'importance de la déformation.

De manière avantageuse, le seuil minimum prédéterminé correspond sensiblement à une déformation provoquée par une perte de pression importante et rapide tel que lors d'un éclatement du pneumatique dont on effectue la surveillance. A titre d'exemple non limitatif, les seuils minimum à considérer comme étant des variations de pression importantes sensiblement brutales et subites peuvent être de l'ordre de 0.1 bar/s, et de préférence d'environ 1 ou 2 bars/s. Le temps de réaction est de préférence inférieur à 100 ms.

De manière avantageuse l'orifice calibré est un tube capillaire. Cela permet, lors d'une variation de la pression surveillée, que la pression à l'intérieur de la capsule anéroïde change sensiblement plus lentement que celle autour de la capsule, créant de ce fait un différentiel de pression susceptible d'entraîner une déformation de la capsule.

Le dispositif selon l'invention est avantageusement prévu pour montage sur une roue ; il est alors avantageux de prévoir au moins un moyen de transmission des données vers une partie non rotative du véhicule, afin d'assurer que les signaux puissent transiter de la roue vers le véhicule. Le véhicule peut disposer d'au moins un moyen de réception des données.

De manière avantageuse, à chaque type de variation de pression positive ou négative correspond une polarité du signal envoyé par le circuit logique.

De manière avantageuse, la valeur de l'intervalle de temps entre les mesures de la pression est modulée en fonction du taux ζ de variation de pression. Ainsi par exemple, plus ζ est grand, plus l'intervalle T est petit.

La présente invention prévoit également un pneumatique comportant un système de mesure de pression et de commande de gonflage / dégonflage de pneumatique tel que préalablement présenté.

De manière avantageuse, le dispositif de détection d'éclatement est moulé dans une paroi du pneumatique.

La présente invention prévoit également une jante comportant un système de mesure de pression et de commande de gonflage / dégonflage de pneumatique tel que préalablement présenté.

La présente invention prévoit également une méthode de mesure de pression et de commande de gonflage / dégonflage de pneumatique consistant à :
- réaliser des mesures de la pression d'un pneumatique à l'aide d'un capteur de pression en communication fluidique avec la pression ambiante du pneumatique et susceptible de mesurer cette pression, lesdites mesures étant effectuées à des intervalles de temps correspondant soit à un mode dit « normal », soit à un mode dit « accéléré » ;
- surveiller les variations de pression de pneumatique susceptibles de se produire à l'aide d'un détecteur de variation de pression susceptible de réagir à une variation de la pression à l'intérieur de la cavité du pneumatique ;
- sur la base de l'information fournie par le détecteur de variation de pression, de commander soit le passage dudit mode « normal » vers ledit mode « accéléré », ou le passage dudit mode «accéléré » vers ledit mode « normal».

De manière préférentielle, dans la méthode selon l'invention, le mode « accéléré » est celui dans lequel l'intervalle de temps entre les mesures effectuées par le capteur de pression est sensiblement plus court qu'en mode « normal ». Par exemple, le mode « accéléré » peut être celui dans lequel l'intervalle de temps entre les mesures effectuées par le capteur de pression est sensiblement nul.

De manière avantageuse, lors du passage du mode « économie » vers le mode « normal », on prévoie une courte période transitoire de mode de mesure « accéléré », permettant de déceler très rapidement, voire sensiblement instantanément, toute anomalie au niveau de la pression d'un ou plusieurs pneumatiques.

Selon un autre mode de réalisation avantageux du système du mesure ou de la méthode selon l'invention, il est prévu, en cas de dépassement d'un seuil critique de variation de pression détecté par le détecteur de variation de pression, d'émettre un signal d'avertissement pour le conducteur, ou d'envoyer un signal aux dispositifs d'assistance à la conduite tels que l'ABS ou l'ESP. Dans un tel cas de figure, le signal du détecteur de variation de pression est avantageusement utilisé seul, sans que l'on procède nécessairement à une mesure de la pression avec le capteur de pression, afin d'avoir un temps de réaction le plus court possible.

D'autres caractéristiques et avantages de l'invention apparaîtront à la lecture de la description du dispositif de détection d'éclatement conforme à l'invention, donnée à titre non limitatif, en se référant aux figures en annexe, dans lesquelles:
la figure 1 présente une vue en coupe schématique d'un capteur de variation de pression selon l'invention ;
la figure 2 présente un diagramme illustrant des exemples de signaux associés à certains types de variations de pression susceptibles de se présenter au niveau des pneumatiques d'un véhicule ;
la figure 3 présente un organigramme comparatif de la surveillance d'un pneumatique avec d'une part, du côté gauche du diagramme, un capteur de pression conventionnel, et d'autre part, dans la partie droite du diagramme, un détecteur de variation de pression selon l'invention ;
la figure 4 illustre un schéma fonctionnel d'un système de mesure de pression et de commande de gonflage / dégonflage de pneumatique selon l'invention ;
les figures 5a et 5b illustrent un autre type de détecteur de variation de pression, comportant une capsule anéroïde ;

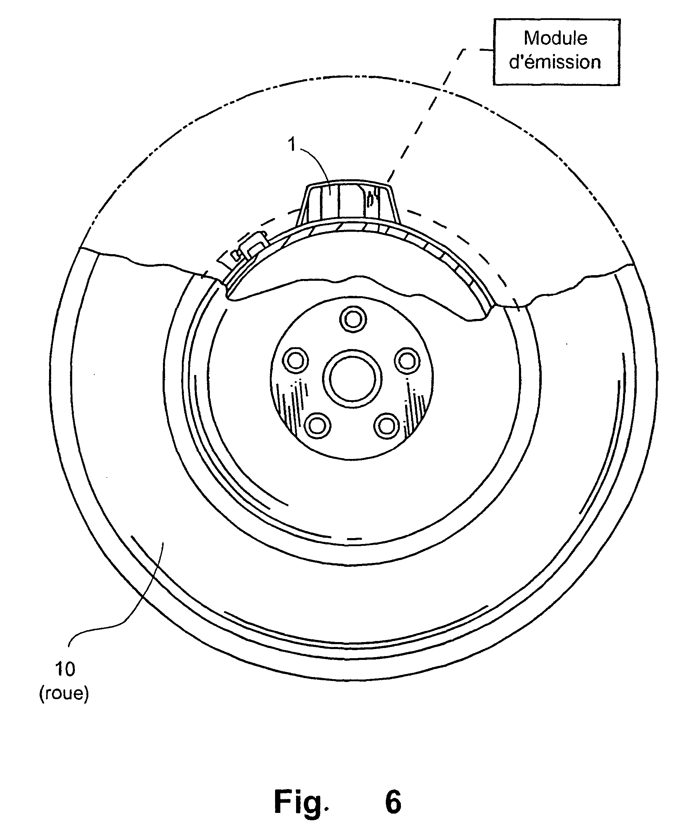

la figure 6 illustre un schéma fonctionnel d'implantation système de mesure de pression et de commande de gonflage / dégonflage de pneumatique selon l'invention.

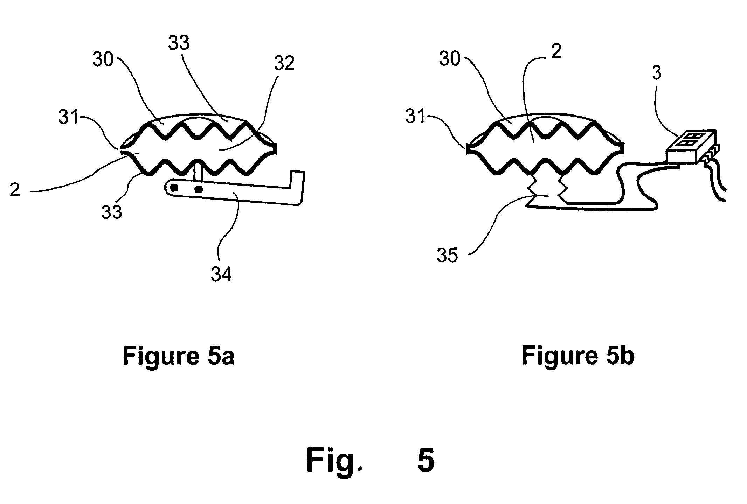

La figure 4 illustre un schéma fonctionnel d'un système de surveillance de la pression de pneumatique 1 selon l'invention. Il comporte un capteur de pression 7, un capteur de variation de pression 2, tel que décrit ci-après. Un module de gestion 3, coopérant électriquement ou mécaniquement avec le capteur 2 est prévu. Une pile 4 permet l'alimentation du module 3 et du capteur 7, et éventuellement du capteur 2, mais un type avantageux de capteur 2 selon l'invention ne nécessite pas d'alimentation, ce qui permet d'économiser la pile 4. De préférence, afin de permettre la transmission des données depuis la roue du véhicule vers le véhicule, on prévoit avantageusement un module de transmission 5. Il peut s'agir par exemple d'un émetteur (de préférence HF), d'un transpondeur, etc. Une éventuelle antenne 6 complète le dispositif de la figure 4.

Ce dispositif est prévu pour montage sur une roue, soit sur la jante ou sur le pneumatique. Il peut également être intégré à l'un ou l'autre de ces éléments, comme par exemple moulé dans une parois du pneumatique. Pour cette raison, on utilise de préférence un détecteur de variation de pression 2 ne nécessitant pas d'alimentation, afin de permettre une durée de vie de la pile 4 qui puisse dans la mesure de possible correspondre à celle du pneumatique, de la roue ou du véhicule. La pile 4 est alors intégrée au dispositif 1 ; elle peut par exemple être soudée. De cette façon, on évite les problèmes fréquents de contacts inhérents aux piles remplaçables.

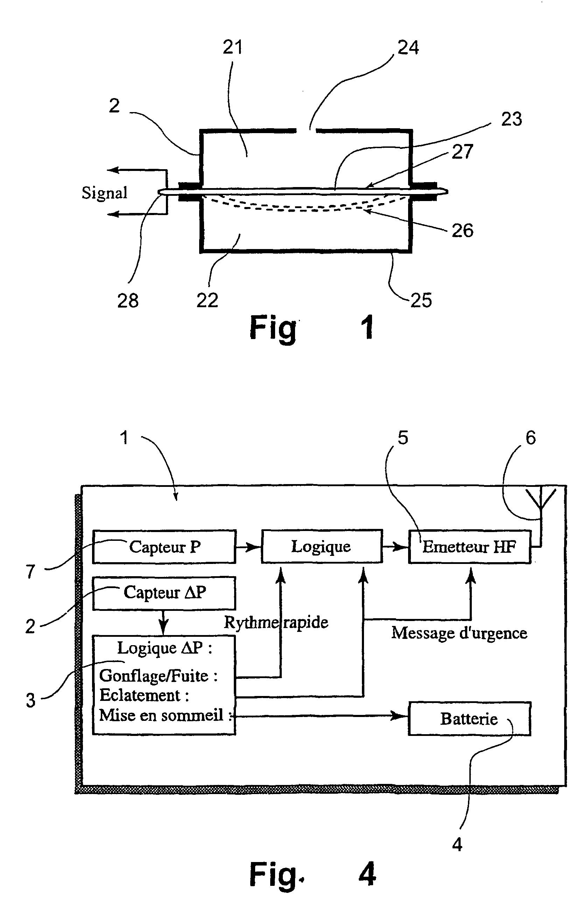

La figure 1 illustre un type particulièrement avantageux de détecteur de variation de pression 2, de type piézo-électrique. Il comprend un boîtier 25, pourvu de deux chambres 21 et 22, séparées et sensiblement isolées l'une de l'autre par une membrane 23 de type piézo-électrique. Une ouverture 24 permet d'établir une communication fluidique entre une première chambre 21 du détecteur, et le milieu ou ambiance que l'on souhaite surveiller. La chambre 22 est soumise à une pression de référence, voire sans pression ou sous vide. Une sortie 28 électrique permet de transmettre le signal de faible courant généré pendant toute déformation de la membrane 23.

Dans le cas où la chambre 22 est sous vide, la membrane 23 présente en général une déformation concave ; elle est poussée vers la chambre 22 sous vide. Toute pression additionnelle provenant de l'orifice 24 contribue à déformer la membrane 23 qui occupera une position stabilisée comme par exemple 26. Une éventuelle chute de pression dans la chambre témoin 21 entraîne une nouvelle déformation de la membrane 23 qui tend alors à reprendre sa forme ou profil d'origine 27 (sensiblement plat). Lors du changement de courbure de la membrane 23, un faible courant est émis, en fonction de l'amplitude de la déformation et/ ou de la vitesse de déformation. Ainsi, un éclatement du pneumatique relié à la chambre 21 par l'orifice 24 entraîne une chute brutale et importante de la pression dans la chambre 21. La déformation de la membrane 23 d'un premier profil stabilisé vers un second profil stabilisé permet la génération d'un courant par la sortie électrique 28. Ce courant peut par la suite être reçu par un module de gestion 3 et traité de façon appropriée.

Les figures 5a et 5b illustrent un autre type de détecteur de variation de pression 2, comportant une capsule anéroïde 30. Ladite capsule peut être constituée de deux faces 33 en forme de coquille, jointes sur leurs bords respectifs afin de former un boîtier fermé et sensiblement hermétique. Une ouverture calibrée 31, comme par exemple un tube capillaire, est prévue, soit à la jonction des faces ou encore ailleurs sur la capsule. La forme de la capsule peut varier, sans sortir du cadre de la présente invention.

La capsule 30 est agencée de façon à actionner un organe permettant de transformer l'information liée à la déformation de la capsule, en information correspondant par exemple à une information de perte de pression à un niveau dangereux, ou d'éclatement, etc. A cette fin, la capsule peut actionner soit un organe mécanique 34, tel un levier, un bras ou autre, un organe électrique ou électronique 35, tel une résistance variable, ou un organe électromécanique, tel un interrupteur. L'organe en question est avantageusement relié à un module de gestion 3, qui reçoit et traite le signal de façon appropriée.

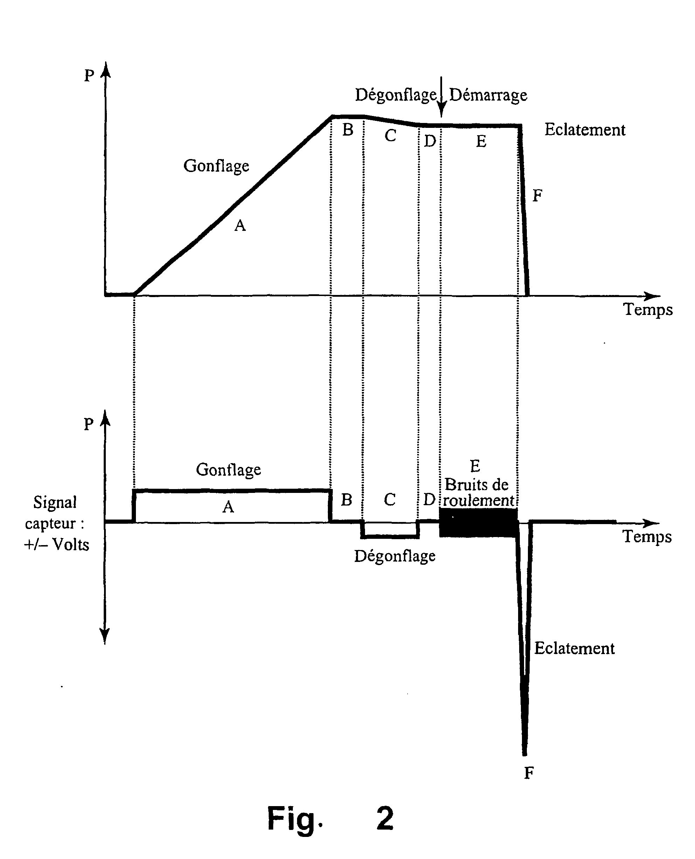

La figure 2 illustre des exemples de signaux susceptibles d'être générés par un détecteur de variation de pression 2 selon l'invention. La figure met en relation la phénomène physique présent et le signal correspondant du détecteur. Par exemple, en mode gonflage A, la pression augmente, donc varie. Cela occasionne la génération d'un signal par exemple positif et constant associé à une variation de pression faible, continue et régulière.

A pression constante, en B et D, aucun signal n'est généré puisque la membrane demeure fixe et ne change pas de profil.

Lors d'une diminution de pression, en C, un signal par exemple négatif et constant peut être associé à une faible diminution de pression, constante et régulière.

En F, le pneumatique éclate, ou subit une perte de pression très importante et rapide, permettant la génération d'un signal sous forme de « pointe », de faible durée, puisque la membrane du capteur est fortement déformée pendant un temps très court, le temps de passer d'un premier profil sensiblement stabilisé vers un autre profil sensiblement stabilisé.

En E, la pression est stable et le véhicule se déplace. Le bruit de roulement peut être perçu par le détecteur, selon sa sensibilité. Il fonctionne alors comme un détecteur ou capteur de bruit ou microphone. La double fonction détecteur de variation de pression / détecteur de bruit de roulement est particulièrement avantageuse. Par exemple, cette double fonction permet d'associer à un signal d'avertissement un mode roulement ou arrêt. Le signal peut alors être traité différemment, le premier de ces deux cas étant plus critique.

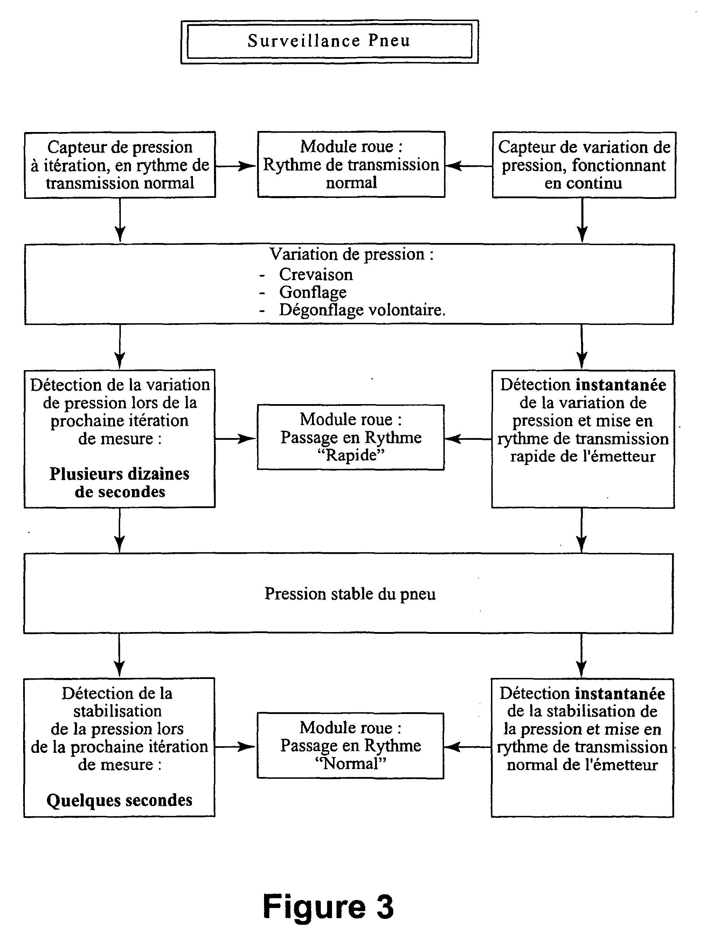

La figure 3 présente un schéma opératoire du mode de surveillance de pneumatiques, à l'aide d'un système de surveillance de pression selon l'invention. En mode de fonctionnement normal, les mesures du capteur de pression 7 sont effectuées par itérations, à des intervalles de temps donnés.

Afin de prolonger au maximum la durée de vie de la pile, on souhaite diminuer le nombre d'itérations pour un temps donné, dès qu'il n'est plus nécessaire de surveiller les pneumatiques de façon continue, typiquement lors de l'arrêt du véhicule, notamment pour un arrêt prolongé. A

Le fonctionnement du système de mesure de pression et de commande de gonflage / dégonflage selon l'invention est le suivant :

Tout d'abord, il est prévu un premier type d'environnement et donc d'utilisation, comme suit : selon ce premier aspect, le système de contrôle permet de réaliser de façon simple, sûre et efficace un gonflage d'un ou plusieurs pneumatiques installés sur un véhicule. Dans un tel cas, le conducteur peut immobiliser son véhicule près d'une station de gonflage. Il gonfle un ou plusieurs pneumatiques de son véhicule. Le système de mesure et de gestion l'aide à effectuer un gonflage en respectant le plus précisément possible les pressions prescrites :lors d'une variation de pression, le système de détection de variation de pression (comprenant un capteur de variation de pression) détecte quasi-instantanément le changement d'état, et commande un passage du mode « normal » de mesure, dans lequel les mesures sont effectuées à des intervalles de temps espacés de l'ordre de 30 à 60 secondes ou même plus, vers un mode de « mesure continue », dans lequel les mesures sont effectuées à des intervalles très courts tels que 1 ou 2 secondes ou même moins.

Dès que la pression atteint le niveau requis ou prescrit, le système peut générer un signal avertissant que le niveau de pression requis est atteint (par exemple le système actionne l'avertisseur éventuellement avec une signature sonore particulière à ce type d'opération). L'opérateur sait alors qu'il doit cesser l'opération de gonflage de ce pneumatique. Il est donc impératif que le système de mesure réagisse très rapidement si on veut éviter un surgonflage du pneumatique.

D'autre part, il est prévu un autre type d'environnement et donc d'utilisation, comme suit : certains véhicules de tourisme, utilitaires ou autres sont équipés d'un système de gonflage centralisé, monté sur le véhicule et prévu pour ajuster le niveau de pression en temps réel, par exemple en fonction des conditions d'utilisation du véhicule, tels que la charge, la vitesse (à haute vitesse il peut s'avérer avantageux d'augmenter la pression), ou en fonction des conditions ou de la qualité de la route (par exemple en cas de présence de boue ou de neige, on diminue avantageusement la pression pour augmenter l'adhérence). La commande du changement de pression peut être soit manuelle, soit automatique.

Supposons un changement des conditions de conduite du véhicule qui nécessite un changement de la pression de gonflage. Un compresseur, monté sur le véhicule, transmet l'air pressurisé par l'entremise des moyeux des roues. En cas de commande de diminution de pression, une valve asservie libère une partie de l'air du pneumatique. Les niveaux d'augmentation ou de diminution de pression sont contrôlés par le système de mesure et de gestion de la pression. Lors d'un changement du niveau de pression, toute variation est immédiatement détectée par le système de mesure et de gestion, via le détecteur de variation de pression.

Ainsi, lors d'une variation de pression, le système de détection de variation de pression (comprenant un capteur de variation de pression) détecte quasi-instantanément le changement d'état, et commande un passage du mode de mesure « normal », dans lequel les mesures sont effectuées à des intervalles de temps espacés de l'ordre de 30 à 60 secondes ou même plus, vers un mode de « mesure continue », dans lequel les mesures sont effectuées à des intervalles très courts tels que 1 ou 2 secondes ou même moins.

Dès que la pression atteint le niveau requis, le système de mesure et de gestion commande immédiatement l'arrêt du gonflage ou du dégonflage, selon le cas. Dans ce cas également, il est alors impératif que le système de mesure réagisse très rapidement si on veut éviter de gonfler ou dégonfler le pneumatique à des niveaux excessifs.

## Revendications

1. Système de mesure de pression et de commande de gonflage / dégonflage de pneumatique comprenant :
- un capteur de pression (7) en communication fluidique avec la pression ambiante du pneumatique, et susceptible de mesurer cette pression ;
- un détecteur de variation de pression (2) susceptible de réagir à une variation de la pression à l'intérieur de la cavité du pneumatique ;
- un module de gestion (3), susceptible de recevoir et de traiter les informations fournies d'une part par le capteur de pression et d'autre part par le détecteur de variation de pression et susceptible, sur la base de l'information fournie par le détecteur de variation de pression, de commander soit le passage d'un mode de mesure de la pression dit « normal » vers un mode de mesure dit « accéléré », ou le passage du mode de mesure «accéléré » vers le mode de mesure « normal».

2. Système de mesure de pression et de commande de gonflage / dégonflage de pneumatique selon la revendication 1, dans lequel le mode « accéléré » est celui dans lequel l'intervalle de temps entre les mesures effectuées par le capteur de pression est sensiblement plus court qu'en mode « normal ».

3. Système de mesure de pression et de commande de gonflage / dégonflage de pneumatique selon la revendication 2, dans lequel le mode « accéléré » est celui dans lequel l'intervalle de temps entre les mesures effectuées par le capteur de pression est sensiblement nul.

4. Système de mesure de pression et de commande de gonflage / dégonflage de pneumatique selon l'une des revendications 1 à 3, dans lequel le détecteur de variation de pression est susceptible de fournir un signal en relation avec le taux ζ de variation de la pression de la cavité du pneumatique.

5. Système de mesure de pression et de commande de gonflage / dégonflage de pneumatique selon l'une des revendications 1 à 4, dans lequel le détecteur de variation de pression est de type piézo-électrique .

6. Système de mesure de pression et de commande de gonflage / dégonflage de pneumatique selon l'une des revendications 1 à 5, dans lequel le détecteur de variation de pression (2) comprend un boîtier (25) muni de deux chambres (21,22) sensiblement isolées l'une de l'autre et séparées par une membrane déformable (23) de type piézo-électrique, une première chambre (21) étant soumise à une pression de référence, la seconde (22) étant susceptible d'être en communication fluidique avec l'ambiance du milieu dans lequel on souhaite effectuer la surveillance, ladite membrane déformable (23) adoptant un profil donné (26) sensiblement stable en l'absence de variation de différentiel de pression entre les deux chambres, ladite membrane étant adaptée pour se déformer pour passer d'un premier profil (26) à un second profil (27) sous l'action d'une variation de la pression de ladite ambiance, les déformations ainsi produites permettant de générer un signal électrique dont l'intensité est en relation avec l'importance de la déformation.

7. Système de mesure de pression et de commande de gonflage / dégonflage de pneumatique selon la revendication 6, dans lequel la pression de référence correspond au vide.

8. Système de mesure de pression et de commande de gonflage / dégonflage de pneumatique selon l'une des revendications 1 à 7, dans lequel l'ambiance du milieu dans lequel on souhaite effectuer la surveillance correspond à la pression à l'intérieur de la cavité d'un pneumatique.

9. Système de mesure de pression et de commande de gonflage / dégonflage de pneumatique selon l'une des revendications 1 à 8, dans lequel le détecteur de variation de pression est de type anéroïde.

10. Système de mesure de pression et de commande de gonflage / dégonflage de pneumatique selon l'une des revendications 8 ou 9, dans lequel le capteur de variation de pression (2) comporte une capsule anéroïde (30) pourvue d'un orifice calibré (31) en communication fluidique avec l'ambiance du milieu dans lequel on souhaite effectuer la détection, ladite capsule étant déformable sous l'action d'une variation de la pression de ladite ambiance.

11. Système de mesure de pression et de commande de gonflage / dégonflage de pneumatique selon la revendication 10, dans lequel un organe étectronique (35) de mesure ou de détection coopère avec ladite capsule de façon à ce que les déformations ainsi produites permettent l'activation dudit organe électronique.

12. Système de mesure de pression et de commande de gonflage / dégonflage de pneumatique selon la de revendication 11, dans lequel ledit organe électronique (35) est un détecteur de seuil, calibré de façon à transmettre un signal électrique lorsqu'un seuil minimum pré-établi de déformation de la membrane est atteint.

13. Système de mesure de pression et de commande de gonflage / dégonflage de pneumatique selon la de revendication 11, dans lequel ledit organe électronique est un transducteur permettant de générer un signal électrique dont l'intensité est en relation avec l'importance de la déformation.

14. Système de mesure de pression et de commande de gonflage / dégonflage de pneumatique selon la revendication 10, dans lequel un organe mécanique (34) de mesure ou de détection coopère avec ladite capsule de façon à ce que les déformations ainsi produites permettent l'activation dudit organe mécanique.

15. Système de mesure de pression et de commande de gonflage / dégonflage de pneumatique selon la revendication 14, dans lequel ledit organe mécanique est un détecteur de seuil, calibré de façon à actionner un organe susceptible de transmettre un signal électrique lorsqu'un seuil minimum pré-établi de déformation de la membrane est atteint.

16. Système de mesure de pression et de commande de gonflage / dégonflage de pneumatique selon la revendication 14, dans lequel ledit organe mécanique coopère avec un rhéostat susceptible de générer un signal électrique dont l'intensité est en relation avec l'importance de la déformation.

17. Système de mesure de pression et de commande de gonflage / dégonflage de pneumatique selon l'une des revendications 10 à 16, dans lequel l'orifice calibré est un tube capillaire.

18. Système de mesure de pression et de commande de gonflage / dégonflage de pneumatique selon l'une des revendications 1 à 17, comprenant également un module de transmission de l'information susceptible de transmettre l'information d'une partie rotative vers une partie fixe du véhicule.

19. Système de mesure de pression et de commande de gonflage / dégonflage de pneumatique selon l'une des revendications 1 à 18, comprenant, pour la partie non rotative du véhicule, au moins un moyen de réception des données.

20. Pneumatique comportant un système de mesure de pression et de commande de gonflage / dégonflage de pneumatique selon l'une des revendications 1 à 19.

21. Pneumatique selon la revendication 20, dans lequel le système de mesure de pression et de commande de gonflage / dégonflage de pneumatique est disposé dans une paroi.

22. Jante comportant un système de mesure de pression et de commande de gonflage / dégonflage de pneumatique selon l'une des revendications 1 à 19.

23. Système de mesure de pression et de commande de gonflage / dégonflage de pneumatique selon l'une des revendications 1 à 19, comprenant au moins un moyen de transmission des données vers une partie non rotative du véhicule.

24. Méthode de mesure de pression et de commande de gonflage / dégonflage de pneumatique consistant à :
- réaliser des mesures de la pression d'un pneumatique à l'aide d'un capteur de pression en communication fluidique avec la pression ambiante du pneumatique et susceptible de mesurer cette pression, lesdites mesures étant effectuées à des intervalles de temps correspondant soit à un mode dit « normal », soit à un mode dit « accéléré » ;
- surveiller les variations de pression de pneumatique susceptibles de se produire à l'aide d'un détecteur de variation de pression susceptible de réagir à une variation de la pression à l'intérieur de la cavité du pneumatique ;
- sur la base de l'information fournie par le détecteur de variation de pression, commander soit le passage dudit mode « normal » vers ledit mode « accéléré », ou le passage dudit mode «accéléré » vers ledit mode « normal».

25. Méthode de mesure de pression et de commande de gonflage / dégonflage de pneumatique selon la revendication 24, dans lequel le mode « accéléré » est celui dans lequel l'intervalle de temps entre les mesures effectuées par le capteur de pression est sensiblement plus court qu'en mode « normal ».

26. Méthode de mesure de pression et de commande de gonflage / dégonflage de pneumatique selon la revendication 25, dans lequel le mode « accéléré » est celui dans lequel l'intervalle de temps entre les mesures effectuées par le capteur de pression est sensiblement nul.

## Claims

1. A pressure measuring and inflation/deflation control system for tyres, comprising:
- a pressure sensor (7) in fluid communication with the ambient pressure of the tyre and capable of measuring this pressure;
- a pressure change detector (2) capable of responding to a change in pressure inside the cavity of the tyre;
- a management module (3), capable of receiving and processing information provided by the pressure sensor on the one hand and on the other hand by the pressure change detector and capable, on the basis of the information provided by the pressure change detector, of actuating either transfer from a pressure measurement mode known as "normal" to a measurement mode known as "accelerated" or transfer from the "accelerated" measurement mode to the "normal" measurement mode.

2. A pressure measuring and inflation/deflation control system for tyres according to claim 1, in which the "accelerated" mode is that in which the time interval between the measurements carried out by the pressure sensor is substantially shorter than in "normal" mode.

3. A pressure measuring and inflation/deflation control system for tyres according to claim 2, in which the "accelerated" mode is that in which the time interval between the measurements carried out by the pressure sensor is substantially zero.

4. A pressure measuring and inflation/deflation control system for tyres according to one of claims 1 to 3, in which the pressure change detector is capable of providing a signal relating to the rate ζ of pressure change in the cavity of the tyre.

5. A pressure measuring and inflation/deflation control system for tyres according to one of claims 1 to 4, in which the pressure change detector is of the piezoelectric type.

6. A pressure measuring and inflation/deflation control system for tyres according to one of claims 1 to 5, in which the pressure change detector (2) comprises a casing (25) provided with two chambers (21, 22), insulated substantially from one another and separated by a piezoelectric type deformable membrane (23), a first chamber (21) being subject to a reference pressure and the second (22) being capable of being in fluid communication with the environment of the medium in which it is desired to effect monitoring, said deformable membrane (23) adopting a given, substantially stable profile (26) in the absence of a change in the pressure differential between the two chambers, said membrane being adapted to become deformed so as to pass from a first profile (26) to a second profile (27) under the action of a pressure change in said environment, the deformations thus produced allowing the generation of an electrical signal, the strength of which is related to the degree of deformation.

7. A pressure measuring and inflation/deflation control system for tyres according to claim 6, in which the reference pressure corresponds to a vacuum.

8. A pressure measuring and inflation/deflation control system for tyres according to one of claims 1 to 7, in which the environment of the medium in which it is wished to perform monitoring corresponds to the pressure inside the cavity of a tyre.

9. A pressure measuring and inflation/deflation control system for tyres according to one of claims 1 to 8, in which the pressure change detector is of the aneroid type.

10. A pressure measuring and inflation/deflation control system for tyres according to one of claims 8 or 9, in which the pressure change sensor (2) comprises an aneroid capsule (30) provided with a calibrated orifice (31) in fluid communication with the environment of the medium in which it is desired to effect detection, said capsule being deformable under the action of a change in the pressure of said environment.

11. A pressure measuring and inflation/deflation control system for tyres according to claim 10, in which an electronic measuring or detecting device (35) cooperates with said capsule in such a way that the deformations thus produced allow actuation of said electronic device.

12. A pressure measuring and inflation/deflation control system for tyres according to claim 11, in which said electronic device (35) is a threshold detector, calibrated in such a way as to transmit an electrical signal when a pre-established minimum threshold for deformation of the membrane is reached.

13. A pressure measuring and inflation/deflation control system for tyres according to claim 11, in which said electronic device is a transducer allowing generation of an electrical signal, the strength of which is related to the degree of deformation.

14. A pressure measuring and inflation/deflation control system for tyres according to claim 10, in which a mechanical measuring or detecting member (34) cooperates with said capsule in such a way that the deformations thus produced allow actuation of said mechanical member.

15. A pressure measuring and inflation/deflation control system for tyres according to claim 14, in which said mechanical member is a threshold detector, calibrated in such a way as to actuate a device capable of transmitting an electrical signal when a pre-established minimum threshold for deformation of the membrane is reached.

16. A pressure measuring and inflation/deflation control system for tyres according to claim 14, in which said mechanical member cooperates with a rheostat capable of generating an electrical signal, the strength of which is related to the degree of deformation.

17. A pressure measuring and inflation/deflation control system for tyres according to one of claims 10 to 16, in which the calibrated orifice is a capillary tube.

18. A pressure measuring and inflation/deflation control system for tyres according to one of claims 1 to 17, also comprising an information transmission module capable of transmitting information from a rotating part to a fixed part of the vehicle.

19. A pressure measuring and inflation/deflation control system for tyres according to one of claims 1 to 18, comprising, for the non-rotating part of the vehicle, at least one data receiving means.

20. A tyre comprising a pressure measuring and inflation/deflation control system for tyres according to one of claims 1 to 19.

21. A tyre according to claim 20, in which the pressure measuring and inflation/deflation control for tyres is arranged in a wall.

22. A rim comprising a pressure measuring and inflation/deflation control system for tyres according to one of claims 1 to 19.

23. A pressure measuring and inflation/deflation control system for tyres according to one of claims 1 to 19, comprising at least one means of transmitting data to a non-rotating part of the vehicle.

24. A method of measuring pressure and controlling inflation/deflation of tyres, consisting in:
- effecting measurements of the pressure of a tyre using a pressure sensor in fluid communication with the ambient pressure of the tyre and capable of measuring said pressure, said measurements being performed at time intervals corresponding either to a mode known as "normal" or a mode known as "accelerated";
- monitoring the tyre pressure changes liable to occur using a pressure change detector capable of responding to a pressure change inside the cavity of the tyre;
- on the basis of the information provided by the pressure change detector, actuating either transfer from said "normal" mode to said "accelerated" mode or transfer from said "accelerated" mode to said "normal" mode.

25. A method of measuring pressure and controlling inflation/deflation of tyres, according to claim 24, in which the "accelerated" mode is that in which the time interval between the measurements carried out by the pressure sensor is substantially shorter than in "normal" mode.

26. A method of measuring pressure and controlling inflation/deflation of tyres, according to claim 25, in which the "accelerated" mode is that in which the time interval between the measurements carried out by the pressure sensor is substantially zero.

## Patentansprüche

1. System zur Druckmessung und zur Aufpump-/Entleerungssteuerung von Luftreifen, das die folgenden Bestandteile umfasst:
- einen Drucksensor (7), der mit dem vorherrschenden Druck des Luftreifens fluidisch in Verbindung steht und der befähigt ist, diesen Druck zu messen,
- einen Detektor für Druckänderungen (2), der befähigt ist, auf eine Änderung des Drucks im Innenraum des Luftreifens zu reagieren, und
- ein Steuermodul (3), das zum Empfang und zur Verarbeitung der Informationen befähigt ist, die zum einen von dem Drucksensor und zum anderen von dem Detektor für Druckänderungen geliefert werden, und das auf Basis der von dem Druckänderungsdetektor gelieferten Information entweder den Übergang von einem als "normal" bezeichneten Modus zur Messung des Drucks zu einem als "beschleunigt" bezeichneten Messmodus oder den Übergang vom "beschleunigten" Messmodus zum "normalen" Messmodus steuern kann.

2. System zur Druckmessung und zur Aufpump-/Entleerungssteuerung von Luftreifen nach Anspruch 1, worin es sich bei dem "beschleunigten" Modus um einen Modus handelt, bei dem das Zeitintervall zwischen den durch den Drucksensor durchgeführten Messungen deutlich kürzer ist als im "normalen" Modus.

3. System zur Druckmessung und zur Aufpump-/Entleerungssteuerung von Luftreifen nach Anspruch 2, worin es sich bei dem "beschleunigten" Modus um einen Modus handelt, bei dem das Zeitintervall zwischen den durch den Drucksensor durchgeführten Messungen fast Null ist.

4. System zur Druckmessung und zur Aufpump-/Entleerungssteuerung von Luftreifen nach einem der Ansprüche 1 bis 3, worin der Detektor für Druckänderungen befähigt ist, ein Signal zu liefern, das in Beziehung zur Druckänderungsrate ζ im Innenraum des Luftreifens steht.

5. System zur Druckmessung und zur Aufpump-/Entleerungssteuerung von Luftreifen nach einem der Ansprüche 1 bis 4, worin der Detektor für Druckänderungen vom piezoelektrischen Typ ist.

6. System zur Druckmessung und zur Aufpump-/Entleerungssteuerung von Luftreifen nach einem der Ansprüche 1 bis 5, worin der Detektor für Druckänderungen (2) ein Gehäuse (25) aufweist, das mit zwei Kammern (21, 22) ausgestattet ist, die im Wesentlichen voneinander isoliert und durch eine deformierbare Membran (23) vom piezoelektrischen Typ voneinander getrennt sind, wobei eine erste Kammer (21) einem Referenzdruck ausgesetzt ist und die zweite Kammer (22) fluidisch mit dem Messgegenstand des Mediums, in dem die Überwachung durchgeführt werden soll, in Verbindung stehen kann, wobei die deformierbare Membran (23) ein gegebenes, im Wesentlichen stabiles Profil (26) einnimmt, wenn sich die Druckdifferenz zwischen den beiden Kammern nicht verändert, und wobei diese Membran so ausgelegt ist, dass sie unter der Einwirkung einer Druckänderung dieses Messgegenstands deformiert werden kann und so von einem ersten Profil (26) zu einem zweiten Profil (27) übergeht, wobei durch die so hervorgerufenen Deformationen ein elektrisches Signal erzeugt werden kann, dessen Intensität in Beziehung zu dem Ausmaß der Deformation steht.

7. System zur Druckmessung und zur Aufpump-/Entleerungssteuerung von Luftreifen nach Anspruch 6, worin es sich bei dem Referenzdruck um einen Vakuumdruck handelt.

8. System zur Druckmessung und zur Aufpump-/Entleerungssteuerung von Luftreifen nach einem der Ansprüche 1 bis 7, worin der Messgegenstand des Mediums, in dem die Überwachung durchgeführt werden soll, dem Druck im Inneren eines Luftreifens entspricht.

9. System zur Druckmessung und zur Aufpump-/Entleerungssteuerung von Luftreifen nach einem der Ansprüche 1 bis 8, worin der Detektor für Druckänderungen vom aneroiden Typ ist.

10. System zur Druckmessung und zur Aufpump-/Entleerungssteuerung von Luftreifen nach einem der Ansprüche 8 oder 9, worin der Druckänderungsdetektor (2) eine mit einer kalibrierten Öffnung (31) versehene Aneroiddose (30) aufweist, die mit dem Messgegenstand des Mediums, in dem die Detektion erfolgen soll, fluidisch in Verbindung steht, wobei die Dose unter der Einwirkung einer Druckänderung dieses Messgegenstands deformierbar ist.

11. System zur Druckmessung und zur Aufpump-/Entleerungssteuerung von Luftreifen nach Anspruch 10, worin eine elektronische Mess- oder Detektoreinheit (35) mit der Dose so zusammenwirkt, dass diese elektronische Einheit durch die auf diese Weise erzeugten Deformationen aktiviert werden kann.

12. System zur Druckmessung und zur Aufpump-/Entleerungssteuerung von Luftreifen nach Anspruch 11, worin die elektronische Einheit (35) ein Schwellenwertdetektor ist, der so kalibriert ist, dass er ein elektrisches Signal überträgt, wenn ein vorab festgesetzter minimaler Schwellenwert der Deformation der Membran erreicht wird.

13. System zur Druckmessung und zur Aufpump-/Entleerungssteuerung von Luftreifen nach Anspruch 11, worin die elektronische Einheit ein Wandler ist, mit dem ein elektrisches Signal erzeugt werden kann, dessen Intensität zu dem Ausmaß der Deformation in Beziehung steht.

14. System zur Druckmessung und zur Aufpump-/Entleerungssteuerung von Luftreifen nach Anspruch 10, worin eine mechanische Mess- oder Detektoreinheit (34) mit der Dose so zusammenwirkt, dass diese mechanische Einheit durch die auf diese Weise erzeugten Deformationen aktiviert werden kann.

15. System zur Druckmessung und zur Aufpump-/Entleerungssteuerung von Luftreifen nach Anspruch 14, worin die mechanische Einheit ein Schwellenwertdetektor ist, der so kalibriert ist, dass er eine Einheit aktiviert, die ein elektrisches Signal übertragen kann, wenn ein vorab festgesetzter minimaler Schwellenwert der Deformation der Membran erreicht wird.

16. System zur Druckmessung und zur Aufpump-/Entleerungssteuerung von Luftreifen nach Anspruch 14, worin die mechanische Einheit mit einem Regelwiderstand zusammenwirkt, der befähigt ist, ein elektrisches Signal zu erzeugen, dessen Intensität zu dem Ausmaß der Deformation in Beziehung steht.

17. System zur Druckmessung und zur Aufpump-/Entleerungssteuerung von Luftreifen nach einem der Ansprüche 10 bis 16, worin die kalibrierte Öffnung eine Kapillare ist.

18. System zur Druckmessung und zur Aufpump-/Entleerungssteuerung von Luftreifen nach einem der Ansprüche 1 bis 17, das ferner ein Modul zur Übermittlung der Information umfasst, das befähigt ist, die Information von einem rotierenden Teil zu einem unbewegten Teil des Fahrzeugs zu übertragen.

19. System zur Druckmessung und zur Aufpump-/Entleerungssteuerung von Luftreifen nach einem der Ansprüche 1 bis 18, das in dem nicht rotierenden Teil des Fahrzeugs mindestens eine Vorrichtung zum Empfang der Daten aufweist.

20. Luftreifen, der ein System zur Druckmessung und zur Aufpump-/Entleerungssteuerung von Luftreifen nach einem der Ansprüche 1 bis 19 aufweist.

21. Luftreifen nach Anspruch 20, worin das System zur Druckmessung und zur Aufpump-/Entleerungssteuerung von Luftreifen in einer Wand angeordnet ist.

22. Felge, die ein System zur Druckmessung und zur Aufpump-/Entleerungssteuerung von Luftreifen nach einem der Ansprüche 1 bis 19 aufweist.

23. System zur Druckmessung und zur Aufpump-/Entleerungssteuerung von Luftreifen nach einem der Ansprüche 1 bis 19, das mindestens eine Vorrichtung zur Übermittlung der Daten zu einem nicht rotierenden Teil des Fahrzeugs umfasst.

24. Verfahren zur Druckmessung und zur Aufpump-/Entleerungssteuerung von Luftreifen, das darin besteht:
- Messungen des Drucks eines Luftreifens mit Hilfe eines Drucksensors durchzuführen, der mit dem vorherrschenden Druck des Luftreifens fluidisch in Verbindung steht und der befähigt ist, diesen Druck zu messen, wobei die Messungen in Zeitintervallen erfolgen, die entweder einem als "normal" bezeichneten Modus oder einem als "beschleunigt" bezeichneten Modus entsprechen,
- die Druckänderungen des Luftreifens, die stattfinden können, mit einem Detektor für Druckänderungen zu überwachen, der befähigt ist, auf eine Änderung des Drucks im Innenraum des Luftreifens zu reagieren, und
- auf der Grundlage der von dem Druckänderungsdetektor gelieferten Information entweder den Übergang vom "normalen" Modus in den "beschleunigten" Modus oder den Übergang vom "beschleunigten" Modus zum "normalen" Modus auszulösen.

25. Verfahren zur Druckmessung und zur Aufpump-/Entleerungssteuerung von Luftreifen nach Anspruch 24, worin es sich bei dem "beschleunigten" Modus um einen Modus handelt, bei dem das Zeitintervall zwischen den durch den Drucksensor durchgeführten Messungen wesentlich kürzer ist als im "normalen" Modus.

26. Verfahren zur Druckmessung und zur Aufpump-/Entleerungssteuerung von Luftreifen nach Anspruch 25, worin es sich bei dem "beschleunigten" Modus um einen Modus handelt, bei dem das Zeitintervall zwischen den durch den Drucksensor durchgeführten Messungen fast Null ist.
